Europäisches Patentamt

European Patent Office

Office européen des brevets

(19)

(11) Veröffentlichungsnummer: **0 178 263**
**B1**

(12) # EUROPÄISCHE PATENTSCHRIFT

(45) Veröffentlichungstag der Patentschrift: **16.08.90**

(51) Int. Cl.⁵: **H 01 S 3/03**, H 01 S 3/097

(21) Anmeldenummer: **85810460.7**

(22) Anmeldetag: **08.10.85**

(54) **Gaslaser mit mindestens einer axial gasdurchströmten Erregungsstrecke.**

(30) Priorität: **10.10.84 CH 4861/84**

(43) Veröffentlichungstag der Anmeldung:
**16.04.86 Patentblatt 86/16**

(45) Bekanntmachung des Hinweises auf die
Patenterteilung:
**16.08.90 Patentblatt 90/33**

(84) Benannte Vertragsstaaten:
**AT BE CH DE FR GB IT LI NL SE**

(56) Entgegenhaltungen:
**EP-A-0 080 715**
**US-A-3 671 883**
**US-A-3 720 885**
**US-A-4 274 065**
**US-A-4 470 144**

**PATENTS ABSTRACTS OF JAPAN, Band 8, Nr.
13 (E-222) 1450r, 20. Januar 1984 & JP-A-58-178
579**
**PATENTS ABSTRACTS OF JAPAN, Band 8, Nr.
39 (E-228) 1476r, 21. Februar 1984 & JP-A-58-196
080**

(73) Patentinhaber: **PRC CORPORATION**
**North Frontage Road**
**Landing, NJ 07850 (US)**

(72) Erfinder: **Weiss, Hardy P., Dr.**
**Im Seeblick**
**CH-8821 Hütten (CH)**

(74) Vertreter: **Troesch, Hans Alfred, Dr. Ing. et al**
**Walchestrasse 19**
**CH-8035 Zürich (CH)**

## Beschreibung

Die vorliegende Erfindung betrifft einen Gaslaser mit mindestens einem axial gasdurchströmten Erregungsrohr, sowie mit einer Elektrodenanordnung zur elektrischen Erregung des Gases im Rohr, sowie mit einer an der Peripherie des Erregungsrohres im wesentlichen gleich verteilt einmündenden Einlassanordnung und einer usmündenden Auslassanordnung für das Gas, wobei die Einlassanordnung in Axialschnitten betrachtet, eine äussere, gegen die Wandung des Erregungsrohres konvergierende Strömungsführung aufweist.

Ein Gaslaser der genannten Art ist aus der EP-A-0080715 bekannt. Die Einlassanordnung umfasst eine koaxial, zum Erregungsrohr angeordnete Verteilkammer, deren Aussenwandung sich in einer Stufe auf den Durchmesser des Erregungsrohres verringert. Als äussere Strömungsführung für das Gas aus der Verteilkammer ist diese Stufe durch einen hohlkegelförmigen Füllkörper mit geraden Mantellinien ausgeglichen. Innen ist die Verteilkammer durch einen im wesentlichen, dem Durchmesser des Entladungsrohres angepassten Rohrstutzen, begrenzt, wobei axial zwischen diesem Rohrstutzen und dem Erregungsrohr ein aussen durch den erwähnten Hohlkegelkörper begrenzter Raum gebildet wird. In diesen Raum strömt im wesentlichen axial das Gas aus der Verteilkammer ein und durchströmt in diesem Raum im wesentlichen in Querschnittsebene liegend Elektrodenplatten mit koaxial angeordneten Kränzen von Gasdurchtrittsöffnungen.

Nun ist es bekannt, dass bei Axialgaslasern die Entstehung grossräumiger Turbulenzen im Erregungsrohr möglichst verhindert werden muss. Die Turbulenzverhältnisse entlang des Erregungsrohres sind, unter anderem auch massgeblich durch die Verhältnisse an der Einlassanordnung zum Erregungsrohr, bestimmt.
Im folgenden gilt die Definition:
Eine Turbulenz in einem Erregungsrohr ist "grossräumig", falls über den Rohrquerschnitten ein Turbulenzzentrum vorliegt. Liegen zwei oder mehrere solcher Zentren vor, wird die Turbulenz als "kleinräumig" bezeichnet.

Die erwähnt grossräumigen Turbulenzen werden nun insbesondere dadurch erzeugt, dass bei der irgendwo zwangsläufig radial zugeführten Gasströmung, dank deren Umlenkung in axiale Richtung im Entladungsrohr an der Peripherie des Erregungsrohres unterschiedlich kleinräumige Turbulenzen bzw. Wirbel entstehen, so dass durch eine solche, bezüglich der Erregungsrohrachse asymmetrische Anregung im Strom abliegenden Erregungsrohr die erwähnt grossräumigen Turbulenzen entstehen.

Die vorliegende Erfindung setzt sich zum Ziel an einem Gaslaser genannter Art zu verhindern, dass entlang des Erregungsrohres grossräumige Turbulenzen entstehen. Zu diesem Zweck zeichnet sich die Erfindung nach dem Wortlaut des kennzeichnenden Teils von Anspruch 1 aus.

Dadurch, dass die äussere Strömungsführung erfindungsgemäss stetig gebogen und stetig in die Rohrwandung übergeführt ist, im wesentlichen ohne dass an Kanten Turbulenzen gebildet werden, wird die Gaszuführung, ohne Quellen kleinräumiger Wirbel, die zu grossräumigen Turbulenzen Anlass geben, vorgenommen.

Ausführungsvarianten der Erfindung sowie allenfalls zusätzlich vorzusehende Massnahmen zur weiteren Verbesserung der Turbulenzverhältnisse entlang des Erregungsstreckenrohres werden nachfolgend anhand von Figuren beispielsweise erläutert.

Es zeigen:
Fig. 1 eine prinzipielle Darstellung eines "zweistufigen" Hochleistungsgaslasers,
Fig. 2a schematisch einen Abschnitt eines Gaseinlassrohres, mit Mitteln zur Verhinderung grossräumiger Turbulenz,
Fig. 2b eine Querschnittdarstellung der Anordnung gemäss Fig. 2a mit qualitativ eingetragenen zu erreichenden kleinräumigen Turbulenzen,
Fig. 3a eine Darstellung analog zu Fig. 2a, mit einer weiteren Variante der Mittel,
Fig. 3b eine schematische Schnittdarstellung gemäss Linie III-III durch die Anordnung von Fig. 3a,
Fig. 4 eine Darstellung analog zu den Fig. 2a und 3a mit einer weiteren Ausführungsvariante der Grossturbulenz-verhindernden Mittel,
Fig. 5a eine schematische Querschnittsdarstellung durch einen erfindungsgemässen Einlasszonenbereich einer Erregungsstrecke,
Fig. 5b eine schematische Längsschnittdarstellung durch den erfindungsgemässen Bereich von Fig. 5a,
Fig. 6 einen Längsschnittabschnitt analog zur Darstellung von Fig. 5b einer bevorzugten Realisationsform des erfindungsgemässen Einlassbereiches,
Fig. 7a - c schematische Querschnittsdarstellungen durch eine Erregungsstrecke zur Verhinderung grossräumiger Turbulenzen,
Fig. 8 eine schematische Längsschnittdarstellung durch eine erfindungsgemässe Gasauslasszone,
Fig. 9 eine Darstellung analog zu Fig. 8 in einer weiteren Ausführungsvariante,
Fig. 10 anhand einer Darstellung, analog zu den Fig. 8 und 9, eine weitere Ausführungsvariante der erfindungsgemässen Auslasszone,
Fig. 11 eine Erweiterung der Anordnung gemäss Fig. 10 für einen "zweistufigen" Laser gemäss Fig. 1,
Fig. 12 eine schematische Darstellung einer weiteren Ausführungsvariante einer erfindungsgemässen Auslasszone,
Fig. 13 eine schematische Querschnittsdarstellung durch eine Erregungsstrecke mit Einzel-Elektroden,
Fig. 14 eine schematische Längsschnittdarstellung einer Laser-Erregungsstrecke, mit anoden- und kathodenseitig, gemäss Fig. 13 ausgebildeten Elektroden sowie einer Feldbild-Steuereinheit,
Fig. 15 anhand eines Erregungsstrecken-Längs-

schnittabschnittes eine weitere Elektrodenvariante,

Fig. 16 anhand einer Darstellung analog zu Fig. 15 eine weitere Variante der dort dargestellten Elektrode.

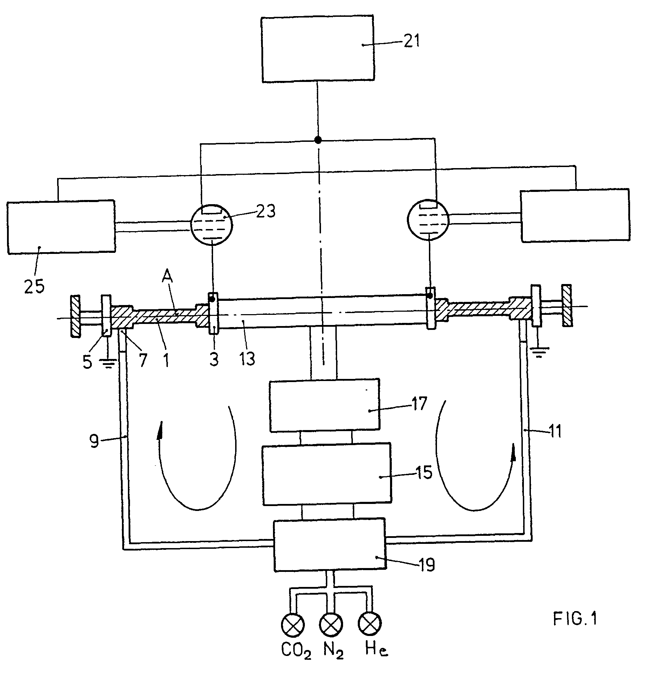

In Fig. 1 ist prinzipiell die Anordnung eines bekannten Hochleistungsgaslasers dargestellt. Es handelt sich dabei um einen "Zweistufen"-Laser, mit einer ersten Stufe links der strichpunktierten Markierung und einer zweiten Stufe rechts davon. Da es sich mit Bezug auf diese Markierung um spiegelbildlich angeordnete, identische Stufen handelt, wird lediglich die Stufe links beschrieben. Die Anordnung umfasst ein Erregungsstreckenrohr 1, an deren Enden Kathode 3 und Anode 5 angeordnet sind. Am einen Ende des Erregungsstreckenrohres 1 mündet, an einer Einlasszone 7, ein Einlassrohr 9 in das Erregungsstreckenrohr 1 ein, am anderen Ende mündet ein Auslassrohr 11 aus einer Aulasszone 13 des Erregungsstreckenrohres 1 aus. Mit Hilfe eines Gebläses 15, welchem Wärmetauscher 17 und 19 vorbzw. nachgeschaltet sind, wird ein Gasgemisch, wie z.B. aus Kohlendioxid, Stickstoff, und Wassefstoff durch das Erregungsstreckenrohr 1 in der mit dem Pfeil angegebenen Richtung getrieben. Die Zentralachse A des beidseitig offenen Erregungsstreckenrohres ist gleichzeitig die optische Achse des Laserstrahles. Wie weiter dargestellt, werden die Elektroden 3 und 5 über eine Hochspannungsquelle 21, ein Stellglied 23, beispielsweise in Form einer Röhre, betrieben, wobei mit Hilfe der Röhre 23 und einer sie ansteuernden Stromregulierung 25 der Elektrodenstrom eingestellt wird.

Die vorliegende Erfindung bezieht sich nun u.a. auf Massnahmen an der Einlasszone 7, und auf Massnahmen an der Auslasszone 13, sowie auf die Ausbildung von Kathode und/oder Anode, alles Massnahmen, die aerodynamisch und/oder elektrisch grossräumige Turbulenzen im Erregungsstreckenrohr 1 verhindern, dabei dort eine gute Gasdurchmischung sicherstellen sollen.

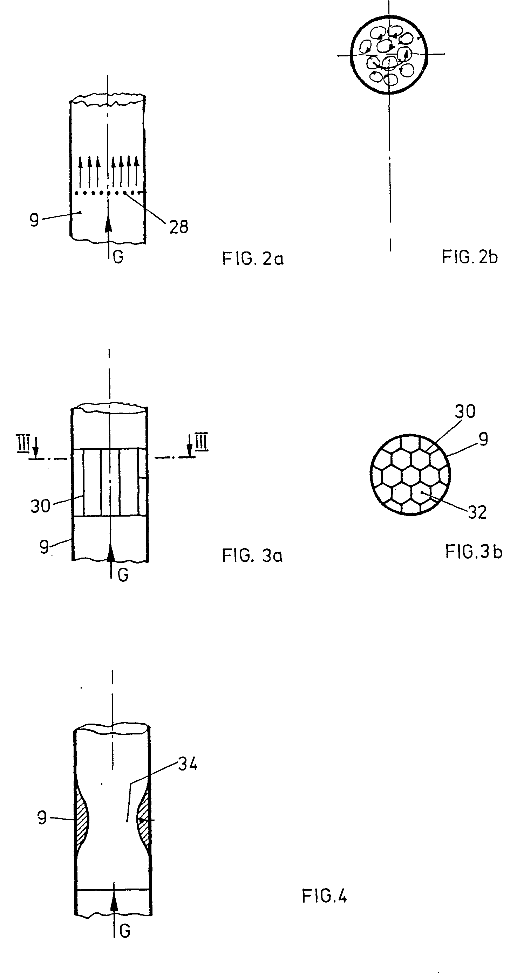

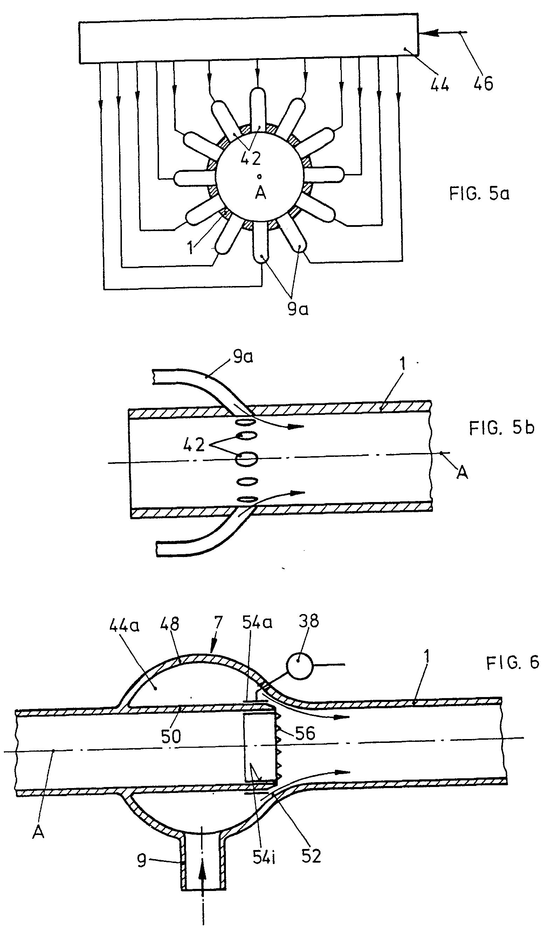

Anhand der Fig. 2 bis 16 werden Massnahmen zur Verhinderung grossräumiger Erregungsstreckenrohrturbulenzen beschrieben, wobei die wesentlichsten in Fig. 5a bis 6, 8 bis 12 dargestellt und diesbezüglich beschrieben werden.

In den Fig. 2 bis 4 ist ein Abschnitt des einlasszonenseitigen Einlassrohres 9 für das Gasgemisch G dargestellt. Im Bereich der Einlasszone 7 wird gemäss Fig. 2a im Einlassrohr 9 ein oder allenfalls mehrere Gitter 28 angeordnet, wie dargestellt vorzugsweise in Querschnittsebene. Dadurch wird eine kleinräumige Turbulenz bereits im Rohr 9 erzeugt, wie in Fig. 2b schematisch dargestellt.

Grossräumige Turbulenzen im Rohr 9, wie in Fig. 2b strichpunktiert eingetragen, die sich in die Strecke fortpflanzen könnten, werden dadurch weitgehendst unterbunden. In Fig. 3a ist anstelle des Gitters 28 eine Mehrzahl von Wänden 30 im Einlassrohr 9 angeodnnet, die den Strömungsquerschnitt unterteilen.

Wie in Fig. 3b dargestellt, werden diese Wände 30 vorzugsweise so angeordnet, dass sie ein Honigwabenmuster 32 bilden. Auch durch diese Massnahme wird der angestrebte Effekt erreicht.

In Fig. 4 ist eine weitere derartige Massnahme dargestellt. Hier ist am Einlassrohr 9 eine kontinuierliche Einschnürung 34 angeformt, in Gasströmungsrichtung betrachtet, somit erst eine kontinuierliche Leitungswandkonvergenz, dann -divergenz eingebaut. Auch durch diese Massnahme wird der erwähnte Zweck erreicht. Die Massnahmen gemäss den Fig. 2 bis 4 können, falls erforderlich, einzeln oder allenfalls in Kombination mit den anhand der Figuren 5 - 6 noch zu beschreibenden wesentlichen Massnahmen eingesetzt werden.

Im wesentlichsten wird nun einlasszonenseitig ein Entstehen grossräumiger Turbulenzen durch die in den Fig. 5 und 6 dargestellten Massnahmen verhindert. In Fig. 5a ist prinzipiell die hierzu vorgeschlagene Technik dargestellt. Am Umfang des Erregungsstreckenrohres 1 kontinuierlich oder, wie in Fig. 5a und 5b dargestellt, diskontinuierlich verteilt, sind Gaseinlassöffnungen 42 angeordnet, die mit einem Satz Einlassrohren 9a verbunden sind, und die das Gas stetig von mehr radialer Richtung in mehr axiale, bezüglich der Strecke 1 leiten, die entlang des Streckenumfanges gleich verteilt sind.

Wie in Fig. 5b dargestellt, wird dabei vorzugsweise die Ausrichtung der Einlassöffnungen 42 so gewählt, dass die Gaseinströmung mindestens vornehmlich in Richtung der Achse A stetig ohne an Kanten Turbulenzen zu bilden in das Erregungsstreckenrohr 1 erfolgt.

Um nun weiter sicherzustellen, dass ab einer für alle Einlassöffnungen 42 bzw. Einlassrohre 9a gemeinsamen Druckgasspeisung, alle vorgesehenen Einlassöffnungen 42 gleichermassen beaufschlagt werden, werden, wie in Fig. 5a schematisch eingetragen, alle Einlassrohre 9a in eine gemeinsame Ausgleichskammer 44 geführt, welch letztere durch eine Gaszuspeiseleitung 46 gespiesen wird. Dadurch wird am Umfang des Erregungsstreckenrohres 1 überall eine gleichmässige, vornehmlich achsial gerichtete Gaseinströmung sichergestellt. Die anhand der Fig. 2 - 4 beschriebenen Massnahmen können allenfalls an den Rohren 9a vorgesehen werden.

In Fig. 6 ist eine bevorzugte Ausführungsform der Einlasszone dargestellt. Das Erregungsstreckenrohr 1 ist einlasszonenseitig zu einem Wulst 48 ausgeformt. Zusammen mit einem die Fortsetzung des Erregungsstreckenrohres 1 bildenden Rohrabschnitt 50 gleichen Innendurchmessers wie der einlasszonenseitige Abschnitt des Erregungsstreckenrohres 1, wird eine Ausgleichskammer 44a als Ringkammer um die Achse A gebildet, in die mindestens ein Einlassrohr 9 einmündet. Der Auslass aus der Ringausgleichskammer 44a erfolgt zwischen einem dem Erregungsstreckenrohr zugekehrten Ende des Abschnittes 50 und der Anfangspartie des Wulstes 48, wodurch eine sich stetig verengende Ringspaltdüse 52 gebildet wird. Auf diese Art und Weise wird eine optimal gleichmässige, vornehmlich mit Bezug auf das Erregungsstreckenrohr achsial gerichtete Gaseinströmung in besagtes Rohr 1 erzielt.

Wie in der Figur dargestellt, können alternativ oder additiv auf der Innenseite des Rohrabschnittes 50 oder der Aussenseite, d.h. der der Ringausgleichskammer 44a zugekehrten Seite, entlang des Rohrabschnittumfanges, Ringelektroden 54i bzw. 54a vorgesehen werden. Die weitere Möglichkeit, die Wandung des Rohrabschnittes 50 direkt als Elektrode einzusetzen, ist nicht eingezeichnet. Die grundsätzlich ringförmig ausgebildete Elektrode kann, wie noch zu beschreiben sein wird, aus einzelnen, am Umfang verteilten Elektrodenabschnitten bestehen, die unter sich isoliert sind. Vorzugsweise weisen die erwähnten Elektrodenabschnitte oder auch bevorzugterweise eingesetzte durchgehende Elektrodenringe gegen das Erregungsstreckenrohr 1 gerichtete scharfe Unstetigkeitsstellen auf, wie Spitzen 56, zur Erzeugung von lokal sehr hohen Feldstärken.

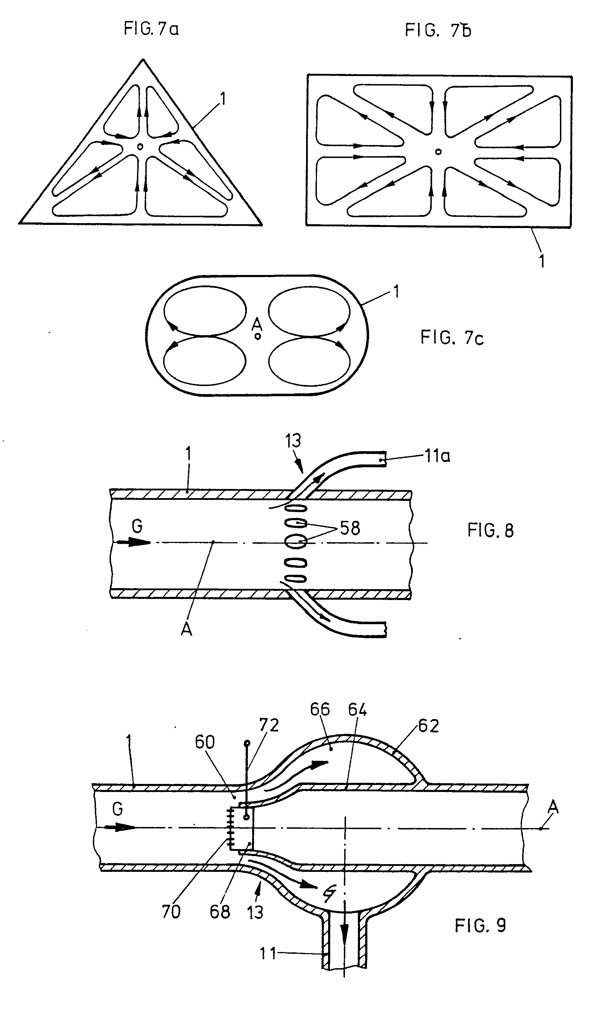

In den Fig. 7a bis 7c sind nun Massnahmen dargestellt, die allenfalls zur weiteren Verbesserung der Turbulenzverhältnisse am Erregungsstreckenrohr selbst eingesetzt werden können.

Bekannterweise ist die Tendenz, dass sich in einem Rohr über dessen Strömungsquerschnitt einzeln und damit im obgenannten Sinn grossvoluminös Turbulenzen ergeben, deste höher, je genauer der Rohrquerschnitt kreisförmig ist. Da dies zu verhindern gerade Zweck der vorgeschlagenen Massnahmen ist, wird gemäss den Fig. 7a - c der Strömungsquerschnitt des Erregungsstreckenrohres 1 von einer Kreisform abweichend ausgebildet, beispielsweise dreieckförmig, vierekkig, mehreckig oder elliptisch.

In den Fig. 7 sind die dadurch entstehenden symmetrischen kleinvoluminösen Turbulenzen qualitativ eingetragen. Diese fördern eine gute Durchmischung des achsial das Erregungsstreckenrohr 1 durchströmenden Gases.

Die Fig. 8 bis 12 zeigen nun wesentliche Massnahmen bzw. den Einsatz von entsprechenden Mitteln an der Auslasszone 13 des Erregungsstreckenrohres 1. Zur Sicherstellung eines, was grossvoluminöse Turbulenz anbetrifft, rückwirkungsfreien Gasauslasses an der Auslasszone 13 wird gemäss Fig. 8, in Analogie zu den Vorkehrungen einlasszonenseitig gemäss Fig. 5b, am Umfang des Erregungsstreckenrohres 1 erfindungswesentlich ein kontinuierlicher, oder wie in Fig. 8 mit den Oeffnungen 58 dargestellt, diskontinuierlich stetiger Auslass gebildet. Gemäss Fig. 8 sind verteilt am Umfang des Rohres 1 Auslassöffnungen 58 vorgesehen, die alle stetig mit Auslassrohren IIa kommunizieren, ihrerseits (nicht dargestellt) in eine Sammelkammer führend. Gemäss Fig. 9 ist kontinuierlich am Umfang des Rohres 1 ein sich stetig aufweitender Ringauslassschlitz 60 gebildet, indem das Rohr 1 zu einem Wulst 62 ausgeformt ist, und auf der dem Rohr 1 abgekehrten Seite des Wulstes 62, ein Rohrabschnitt 64 derart in den Wulst einragt, dass einerseits eine Sammelkammer 66 als Ringkammer um die Achse A gebildet wird, andererseits der ringförmige Auslassschlitz 60. Die Sammelkammer 66 kommuniziert mit dem Auslassrohr 11. Auch hier wird weiter vorgeschlagen, im Bereich des Auslassschlitzes 60 eine Elektrode, wie eine Kathode 68 als Ringkathode, mit Unstetigkeitsstellen 70, vorzusehen, mit entsprechendem elektrischen Anschluss 72.

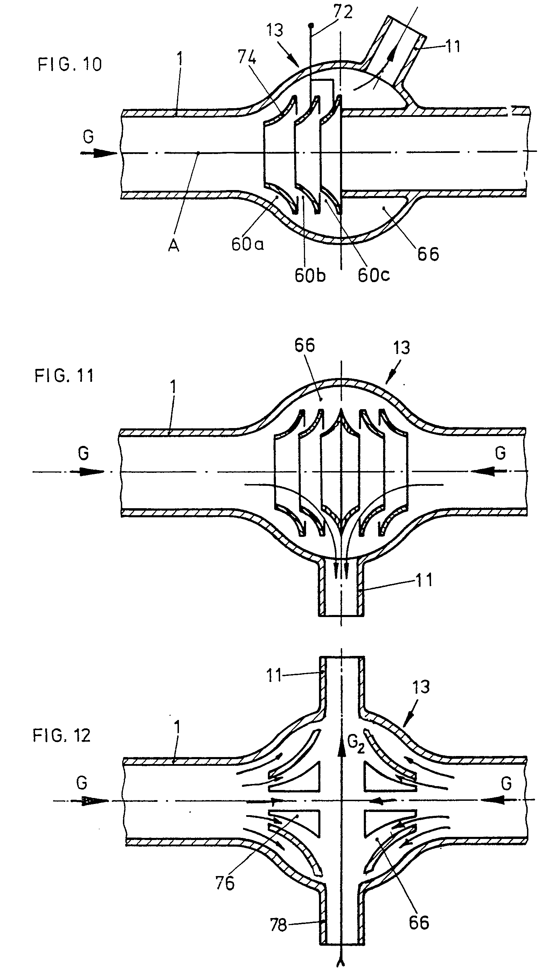

In der Ausführungsform gemäss Fig. 10, wiederum mit wulstgebildeter Ringkammer 66, werden durch hintereinander achsial gestaffelte Ringlamellen 74 mehrere stetig die Gasflussrichtung umrichtende Ringauslassschlitze 60a, 60b... gebildet. Auch bei dieser Ausführungsform können die Ringlamellen für den Einsatz als Elektrode, wie als Kathode, mit elektrischen Anschlüssen 72 versehen sein.

Fig. 11 zeigt schematisch die Ausbildung der Auslasszone 13, analog zu Fig. 10 für einen zweistufigen Laser, wie er in Fig. 1 dargestellt ist.

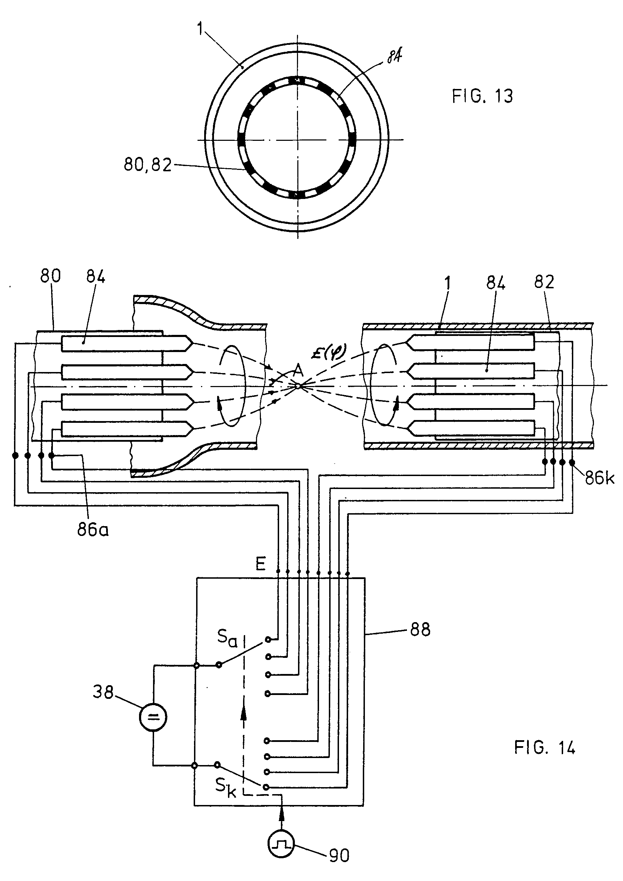

In Fig. 12 ist eine Anordnung grundsätzlich analog zu derjenigen in Fig. 11 dargestellt, d.h. für einen zweistufigen Laser. Anstelle von ringförmig umlaufenden Lamellen sind ein oder mehrere Schaufelkränze 76 vorgesehen. Zur Unerstützung der Gaseinströmung in das Auslassrohr 11 kann nun insbesondere an den Ausführungsvarianten gemäss den Fig. 10 bis 12, wie dies in Fig. 12 dargestellt ist, zusätzlich eine Hochdruckgasleitung 78 in die Sammelkammer 66 einmünden, vorzugsweise mit einer Mündung, die koaxial zur Mündung der Leitung 9 ist. Durch diese Hochdruckgasleitung 78 wird ein Gasstrahl $G_2$ durch die Kammer 66 geblasen und unterstützt im Sinne einer Vektoraddition der Gasstrahlimpulse das Absaugen der aus dem Erregungsstreckenrohr 1 zuströmenden Gase G.

In den Fig. 13 und 14 ist eine Elektrodenanordnung, bestehend aus Kathode und/oder Anode, dargestellt, die bezweckt, den verfolgten Zweck allenfalls in Kombination mit einen oder mehreren der bis anhin beschriebenen Massnahmen, elektrisch zu erzielen bzw. zu unterstützen. Hierzu wird bzw. werden Anode 80 und/oder Kathode 82 grundsätzlich als Ringelektrode ausgebildet. Der Ring ist jedoch, wie besonders aus Fig. 13 ersichtlich, nicht durchgehend als Elektrode eingesetzt, sondern weist achsial ausgerichtete Einzelelektroden in Form von Elektrodenstiften 84 auf.

Diese Elektrodenstifte 84 sind isoliert voneinander montiert und weisen je einen elektrischen Anschluss 86 auf. Gemäss der Figur sind die Elektrodenstifte 84 der Anode 80 mit Anschlüssen 86a, diejenigen der Kathode 82 mit Anschlüssen 86k verbunden und je auf entsprechende Eingänge E einer Steuereinheit 88 geführt. Der Steuereinheit 88 wird ein Zeittaktsignal von einem Generator 90 zugeführt sowie die Spannung der Hochspannungsquelle 38. Die Steuereinheit 88 wirkt nun als Multiplexereinheit mit Multiplexerschaltern $S_a$ und $S_k$ und schaltet, wählbar, gleichzeitig ein oder mehrere anodenseitige Elektrodenstifte 84 und einen oder mehrere kathodenseitige Stifte 82 gleichzeitig auf die Spannungsquelle 38 auf. Werden somit beispielsweise anoden- und kathodenseitig je ein Elektrodenstift aufgeschaltet, so wird das Feldbild entlang der Erregungsstrecke 1 durch die Winkellage der gleichzeitig aufgeschalteten Stifte mit Bezug auf die Achse A festgelegt. Es kann somit, wie angedeutet, ein elektrisches Wirbelfeld erzeugt werden, mit dessen Hilfe auch die Gasturbulenz im Erregungsstreckenrohr beeinflusst werden kann.

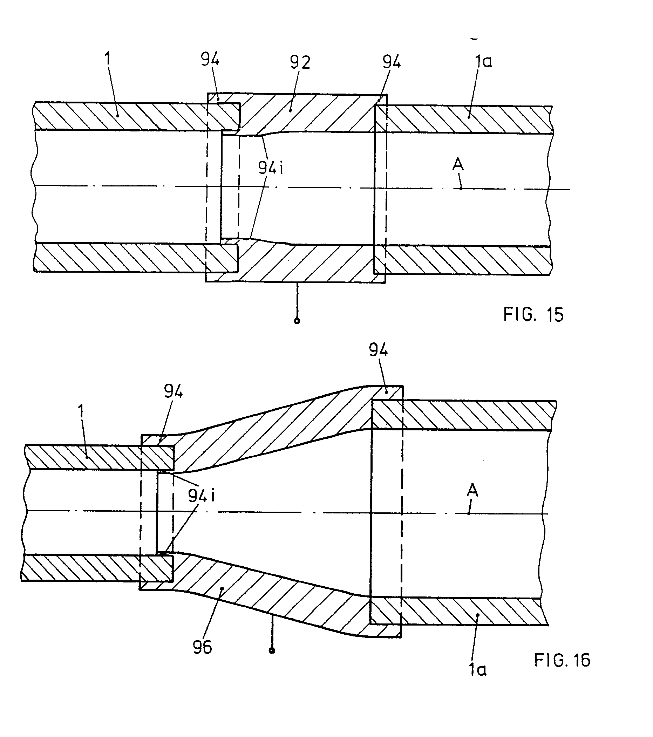

In den Fig. 15 und 16 sind nun weitere Elektrodenanordnungen für den Anoden- und/oder Kathodeneinsatz dargestellt. Zwischen dem Erregungsstreckenrohr 1 und dessen Fortsetzung 1a für den Laserstrahl in der Achse A wird die jeweilige Elektrode gemäss Fig. 15 als Zylinderelektrode 92 ausgelegt. Dabei wird sie so dimensioniert, dass sie wenigstens nahezu absatzfrei die Innenwandungen der Rohre 1 bzw. 1a verbindet. Sie stützt sich, beispielsweise auf beidseitig angeordneten, achsial ausgerichteten Ringkragen 94 ab. Müssen nach dem Erregungsstreckenrohr 1 die Querschnittsdimensionen des Fortsetzungsrohres 1a mit Bezug auf die Querschnittsdimensionen des Erregungsstreckenrohres 1 geändert werden, so wird, wie in Fig. 16 dargestellt, die Elektrode 96 entsprechend divergierend oder konvergierend ausgebildet, wobei sichergestellt bleibt, dass die Innenwandungen der Rohre 1 und 1a einerseits praktisch absatzfrei verbunden werden, und radial praktisch spaltfrei, dank eines dünnen Innenkragens 94i.

## Patentansprüche

1. Gaslaser mit mindestens einem axial gasdurchströmten Erregungsrohr sowie mit einer Elektrodenanordnung zur elektrischen Erregung des Gases im Rohr sowie mit einer an der Peripherie des Erregungsrohres im wesentlichen gleich verteilt einmündenden Einlassanordnung und einer ausmündenden Auslassanordnung für das Gas, wobei die Einlassanordnung, in Axialschnitten betrachtet, eine äussere, gegen die Wandung des Erregungsrohres konvergierende Strömungsführung aufweist, dadurch gekennzeichnet, dass die Strömungsführung stetig gebogen und stetig in die Rohrwandung übergeführt ist, im wesentlichen ohne dass an Kanten Turbulenzen gebildet werden.

2. Gaslaser nach Anspruch 1, dadurch gekennzeichnet, dass die Einlassanordnung (7) mindestens eine Ringspaltdüse (52) umfasst.

3. Gaslaser nach einem der Ansprüche 1 oder 2, dadurch gekennzeichnet, dass die Einlassanordnung aus einer Ausgleichskammer (44, 44a) gespiesen wird, in welche eine Gaszuführleitungsanordnung (9, 46) einmündet.

4. Gaslaser nach Anspruch 3, dadurch gekennzeichnet, dass die Ausgleichskammer (44a) eine Ringkammer um die Achse (A) des Erregungsrohres umfasst.

5. Gaslaser nach einem der Ansprüche 1 - 4, dadurch gekennzeichnet, dass die Einlassanordnung und/oder die Auslassanordnung mindestens teilweise durch Teile der Elektrodenanordnung (34, 54a, 54i, 70, 74, 82, 84) gebildet sind.

6. Gaslaser nach einem der Ansprüche 1 - 5, dadurch gekennzeichnet, dass die Auslassanordnung an der Peripherie des Erregungsrohres im wesentlichen gleich verteilt ausmündet, wobei die Auslassanordnung eine äussere von der Wandung des Erregungsrohres stetig divergierende Strömungsführung aufweist.

7. Gaslaser nach Ansprüch 6, dadurch gekennzeichnet, dass die Auslassanordnung (13) mindestens einen Ring-Auslassspalt (60) umfasst.

8. Gaslaser nach Anspruch 7, dadurch gekennzeichnet, dass mehrere Auslassringspalte (60a, b, c) in Erregungsrohr-Achsrichtung (A) hintereinander angeordnet sind.

9. Gaslaser nach Ansprüch 7 oder 8, dadurch gekennzeichnet, dass die Auslassanordnung mindestens einen Schaufelkranz (76) umfasst, am Umfang des Erregungsrohres (1) angeordnet.

10. Gaslaser nach Anspruch 5, dadurch gekennzeichnet, dass die Auslassanordnung in eine Sammelkammer (66) einmündet, welche in eine Gasabführleitungsanordnung (11) ausmündet, wobei die Sammelkammer (66) vorzugsweise als Ringkammer um die Erregungsrohrachse (A) ausgebildet ist.

11. Gaslaser nach einem der Ansprüche 1 - 10, dadurch gekennzeichnet, dass die Auslassanordnung (13) eine einmündende Druckgasleitung (78) umfasst, deren Einmündung vorzugsweise zu einer Ausmündung (11) für das das Rohr durchströmende Gas wenigstens nahezu koaxial ist.

12. Gaslaser nach einem der Ansprüche 1 - 11, dadurch gekennzeichnet, dass das Erregungsrohr mindestens in einem Abschnitt einen von einer Kreisform abweichenden Querschnitt (Fig. 7) aufweist.

13. Gaslaser nach einem der Ansprüche 1 - 3, dadurch gekennzeichnet, dass die Elektrodenanordnung wenigstens nahezu radialabsatz- und -spaltfrei am Umfang der Innenwandung des Erregungsrohres liegt.

14. Gaslaser nach einem der Ansprüche 1 - 13, dadurch gekennzeichnet, dass die Elektrodenanordnung konisch ist, zur Realisierung einer Leitungsquerschnittsänderung mit Bezug auf den Querschnitt des Erregungsrohres, wobei die Elektrodenanordnung wenigstens nahezu radialabsatz- und -spaltfrei am Umfang der Innenwandung des Erregungsrohres einerseits und vorzugsweise auch einer Anschlussstrecke anderseits anliegt.

15. Gaslaser nach einem der Ansprüche 1 - 14, dadurch gekennzeichnet, dass Steuerorgane (84, 82, 88) für das elektrische Feldbild im Erregungsrohr (1) vorgesehen sind.

16. Gaslaser nach einem der Ansprüche 1 - 15, dadurch gekennzeichnet, dass anoden- und/oder kathodenseitig um eine Achse (A) des Erregungsrohres (1) wenigstens vornehmlich achsial ausgerichtete Einzelelektroden (82, 84) vorgesehen sind sowie eine Steueranordnung (88) zur elektrischen Ansteuerung der Einzelelektroden in einer vorgegebenen zeitlichen Sequenz.

17. Gaslaser nach einem der Ansprüche 1 - 16, dadurch gekennzeichnet, dass der Gasströmungsquerschnitt der Gaszuführungsanordnung

(9) strom aufwärts der Einlassanordnung (7) unterteilt ist, vorzugsweise mittels mindestens einer Gitteranordnung (28)

18. Gaslaser nach Anspruch 17, dadurch gekennzeichnet, dass zur Unterteilung eine Mehrzahl von Unterteilungswänden (30) im Querschnitt vorgesehen sind, vorzugsweise in Form eines Honigwabenmusters (32) angeordnet.

19. Gaslaser nach einem der Ansprüche 1 - 16, dadurch gekennzeichnet, dass mindestens eine stetige Querschnittseinschnürung (34) des Gasströmungsquerschnittes der Gaszuführungsanordnung (9) stromaufwärts der Einlassanordnung (7) vorgesehen ist.

**Revendications**

1. Laser à gaz avec au moins une zone d'excitation balayée axialement par le gaz, avec un dispositif d'électrodes pour l'excitation électrique du gaz dans le tube, avec un dispositif d'admission disposé à la périphérie du tube d'excitation et réparti de manière essentiellement régulière et un dispositif d'échappement pour le gaz, où le dispositif d'admission, vu sur les coupes axiales, présente une paroi extérieure de guidage du flux qui converge avec la paroi du tube d'excitation. caractérisé en ce que le guidage du flux présente un coudage régulier avec une transition régulière avec la paroi du tube, essentiellement de manière à ce qu'il ne se forme pas de turbulences sur des arêtes.

2. Laser à gaz selon la revendication 1, caractérisé en ce que le disposition d'admission (7) comprend au moins une buse à fente de forme annulaire (52).

3. Laser à gaz selon une des revendications 1 ou 2, caractérisé en ce que le dispositif d'admission est alimenté par une chambre de compensation (44, 44a) dans laquelle débouche une conduite d'alimentation en gaz (9, 46).

4. Laser à gaz selon la revendication 3, caractérisé en ce que la chambre de compensation (44a) est constituée d'une chambre annulaire autour de l'axe (A) du tube d'excitation.

5. Laser à gaz selon l'une des revendication 1 à 4, caractérisé en ce que le dispositif d'admission et/ou le dispositif d'échappement sont formées au moins partiellement par des parties du dispositif d'électrode (34, 54a, 54i, 70, 74, 82, 84).

6. Laser à gaz selon l'une des revendications 1 à 5, caractérisé en ce que le dispositif d'échappement débouche de manière essentiellement régulière à la périphérie du tube d'excitation, ce dispositif d'échappement présentant une paroi extérieure de guidage du gaz divergeant de manière régulière à partir de la paroi du tube d'excitation.

7. Laser à gaz selon la revendication 6, caractérisé en ce que le dispositif d'échappement (13) comprend au moins une fente d'échappement annulaire (60).

8. Laser à gaz selon la revendication 7, caractérisé en ce que plusieurs fentes annulaires d'échappement (60a, b, c) sont disposées successivement sur l'axe (A) du tube d'excitation.

9. Laser à gaz selon une des revendications 7 ou 8, caractérisé en ce que le dispositif d'échappement comprend au moins une couronne en forme d'aube (76) disposée à la périphérie du tube d'excitation (1).

10. Laser à gaz selon la revendication 5, caractérisé en ce que le dispositif d'échappement débouche dans une chambre collectrice (66) qui se termine par une conduite d'échappement du gaz (11), cette chambre collectrice (66) ayant de préférence la forme d'une chambre annulaire disposée autour de l'axe (A) du tube d'excitation.

11. Laser à gaz selon l'une des revendications 1 à 11, caractérisée en ce que dans le dispositif d'échappement (13) débouche une conduite de gaz sous pression (78) dont l'embouchure est de préférence pratiquement coaxiale à l'embouchure de sortie (11) du gaz balayant le tube.

12. Laser à gaz selon l'une des revendications 1 à 11, caractérisé en ce que le tube d'excitation présente au moins sur une partir une section différente de la forme circulaire (figure 7).

13. Laser à gaz selon l'une des revendications 1 à 3, caractérisé en ce que le dispositif d'électrodes est situé à la périphérie de la paroi interne du tube d'excitation, en ne formant au moins pratiquement pas de décrochement radial ou de telles fentes.

14, Laser à gaz selon l'une des revendications 1 à 13, caractérisé en ce que le dispositif d'électrodes est de form conique, afin de réaliser une transition de section d'écoulement par rapport à la section du tube d'excitation, ce dispositif d'électrode reposant d'une part sur la périphérie de la paroi interne du tube d'excitation, en ne formant au moins pratiquement pas de décrochement radial ou de telles fentes et d'autre part sur un tronçon prolongateur.

15. Laser à gaz selon l'une des revendications 1 à 14, caractérisé en ce que des organes de commande (84, 82, 88) sont prévus pour commander le champ électrique dans le tube d'excitation (1).

16. Laser à gaz selon l'une des revendications 1 à 15, caractérisé par des électrodes individuelles (82, 84) orientées au moins approximativement dans le sens axial et disposées du côté de l'anode et/ou de la cathode autour de l'axe (A) du tube d'excitation et par un dispositif de commande (88) pour la commande électrique des électrodes individuelles selon une séquence temporelle prédéterminée.

17. Laser à gaz selon l'une des revendications 1 à 16, caractérisé en ce que la section d'écoulement du gaz du dispositif d'alimentation en gaz (9), en amont du dispositif d'admission du gaz (7), est subdivisée, de préférence à l'aide d'au moins un dispositif de grille (28).

18. Laser à gaz selon la revendication 17, caractérisé en ce qu'une pluralité de parois de subdivision (30) est installée dans la section, de préférence sous la forme d'un dessin en nids d'abeilles (32).

19. Laser à gaz selon l'une des revendications 1 à 16, caractérisé par au moins un étranglement continu de la section d'écoulement du gaz (34) du dispositif d'alimentation en gaz (9) en amont du dispositif d'admission (7).

**Claims**

1. Gas laser comprising at least one excitation tube, in which a gas flows axially, an electrode arrangement for electrical excitation of the gas in the tube and an inlet arrangement joining on the periphery of the excitation tube in a substantially evenly distributed manner as well as an exiting outlet arrangement, whereby the inlet arrangement, when viewed in axial sections, has an outer flow guidance converging towards the wall of the excitation tube, characterised in that the flow guidances is steadily curved and steadily leads into the tube wall, essentially without turbulences being formed on edges.

2. Gas laser according to claim 1, characterised in that the inlet arrangement (7) comprises at least one annular gap nozzle (52).

3. Gas laser according to one of claims 1 or 2, characterised in that the inlet arrangement is fed from an equalisation chamber (44, 44a), into which a gas supply pipe arrangement (9, 46) opens.

4. Gas laser according to claim 3, characterised in that the equalisation chamber (44a) comprises an annular chamber about the axias (A) of the excitation tube.

5. Gas laser according to one of claims 1 to 4, characterised in that the inlet arrangement and/or the outlet arrangement are formed, at least partially, by parts of the electrode arrangement (34, 54a, 54i, 70, 74, 82, 84).

6. Gas laser according to one of claims 1 to 5, characterised in that the outlet arrangement exits from the periphery of the excitation tube in an essentially evenly distributed manner, whereby the outlet arrangement has an outer flow guidance steadily diverging from the wall of the excitation tube.

7. Gas laser according to claim 6, characterised in that the outlet arrangement (13) comprises at least one annular outlet gap (60).

8. Gas laser according to claim 7, characterised in that several annular outlet gaps (60a, b, c) are arranged sequentially in axial direction (A) of the excitation tube.

9. Gas laser according to one of claims 7 or 8, characterised in that the outlet arrangement comprises at least one blade ring (76) arranged on the circumference of the excitation tube (1).

10. Gas laser according to claim 5, characterised in that the outlet arrangement opens into a collection chamber (66), which exits into a gas discharge pipe arrangement (11), whereby the collection chamber (66) is preferably shaped as an annular chamber about the axias (A) of the excitation tube.

11. Gas laser according to one of claims 1 to 10, characterised in that the outlet arrangement (13) comprises a compressed gas line (78) entering into it, the mouth of which being preferably at least approximately coaxial to an exit (11) for the gas flowing through the tube.

12. Gas laser according to one of claims 1 to 11, characterised in that the excitation tube has a cross-section (fig. 7) deviating from a circular shape in at least one portion.

13. Gas laser according to one of claims 1 to 3, characterised in that the electrode arrangement lies on the circumference of the inside wall of the excitation tube almost, at least, without any radial steps or gaps.

14. Gas laser according to one of claims 1 to 13, characterised in that the electrode arrangement is conical for realising a change in pipe cross-section relative to the cross-section of the excitation tube, whereby the electrode arrangement lies on the circumference of, on the one hand, the inside wall of the excitation tube almost, at least, without any radial steps of gaps, and, on the other hand, preferably also of a continuation section.

15. Gas laser according to one of claims 1 to 14, characterised in that control means (84, 82, 88) are provided for the electrical field pattern within the excitation tube (1).

16. Gas laser according to one of claims 1 to 15, characterised in that at least predominantly axially aligned discrete electrodes (82, 84) arranged about an axias (A) of the excitation tube are provided on the anode and/or cathode side, and in that a control arrangement (88) is provided for electrically activating the discrete electrodes at a predetermined time sequence.

17. Gas laser according to one of claims 1 to 16, characterised in that the gas flow cross-section of the incoming gas flow arrangement (9) is partitioned upstream of the inlet arrangement (7), preferably by means of at least one grid arrangement (28).

18. Gas laser according to claim 17, characterised in that a plurality of partitions (30) are provided for cross-sectional partitioning, preferably arranged in the form of a honey comb pattern (32).

19. Gas laser according to one of claims 1 to 16, characterised in that at least one steady cross-section constriction (34) in the gas flow cross-section of the incoming gas flow arrangement (9) is provided upstream of the inlet arrangement (7).

FIG.1

FIG. 2a

FIG. 2b

FIG. 3a

FIG.3b

FIG.4

FIG. 5a

FIG. 5b

FIG. 6

FIG. 7a

FIG. 7b

FIG. 7c

FIG. 8

FIG. 9

4

FIG. 10

FIG. 11

FIG. 12

FIG. 13

FIG. 14

FIG. 15

FIG. 16